# EUROPÄISCHE PATENTSCHRIFT

(11) **EP 4 029 816 B1**
(45) Veröffentlichungstag und Bekanntmachung des Hinweises auf die Patenterteilung: **05.06.2024**
(21) Anmeldenummer: 21209586.3
(22) Anmeldetag: 22.11.2021
(51) Int. Cl.: B29D 30/00, B29D 30/44, B65H 19/10, B65H 26/02

(54) **VORRICHTUNG ZUM ABWICKELN VON EINEM FÜR DIE HERSTELLUNG VON FAHRZEUGREIFEN ERFORDERLICHEN BANDMATERIAL**
DEVICE FOR UNWINDING A STRIP OF MATERIAL REQUIRED FOR THE MANUFACTURE OF VEHICLE TYRES
DISPOSITIF DE DÉROULEMENT D'UN MATIÈRE EN BANDE NÉCESSAIRE À LA FABRICATION DE PNEUS DE VÉHICULE

(30) Priorität: 14.01.2021 DE 102021200302
(43) Veröffentlichungstag der Anmeldung: 20.07.2022
(73) Patentinhaber: Continental Reifen Deutschland GmbH, 30175 Hannover (DE)
(72) Erfinder: Ernst, Gerald, 30165 Hannover (DE); Sewerin, Josef, 30165 Hannover (DE); Behle, Alexander, 30165 Hannover (DE); Knoche, Germar, 30165 Hannover (DE)
(74) Vertreter: Continental Corporation

(56) Entgegenhaltungen:
- WO-A1-2011/073795
- WO-A1-2013/077069
- US-B1- 6 354 533

## Beschreibung

Die Erfindung betrifft eine Vorrichtung zum Abwickeln von einem für die Herstellung von Fahrzeugreifen erforderlichen Bandmaterial, insbesondere Laufstreifenmaterial, von einer Materialtrommel. Die Vorrichtung umfasst einen Förderpfad, entlang welchem sich von der Materialtrommel abgewickeltes Bandmaterial bewegt, und eine Überwachungseinrichtung, welche dazu eingerichtet ist, eine vollständige Abwicklung des Bandmaterials von der Materialtrommel zu erfassen.

Ferner wird ein Verfahren zum Abwickeln von einem für die Herstellung von Fahrzeugreifen erforderlichen Bandmaterial, insbesondere Laufstreifenmaterial, von einer Materialtrommel mittels einer Vorrichtung zum Abwickeln von Bandmaterial vorgelegt. Das Verfahren umfasst das Bewegen des von der Materialtrommel abgewickelten Bandmaterials entlang einer Förderpfads der Vorrichtung und das Überwachen der vollständigen Abwicklung des Bandmaterials von der Materialtrommel mittels einer Überwachungseinrichtung.

Bei der Herstellung von Fahrzeugreifen ist ein präzises Zuschneiden des Laufstreifenmaterials erforderlich, bevor der Laufstreifenzuschnitt auf eine Reifenbautrommel gefördert wird. Vor dem Zuschneiden des Laufstreifenmaterials ist dieses auf einer Materialtrommel aufgewickelt, sodass dem Laufstreifenzuschnitt eine Materialabwicklung von der Materialtrommel vorausgeht.

Moderne Vorrichtungen zum Abwickeln von Laufstreifenmaterial von einer Materialtrommel können mit mehreren Materialtrommeln beschickt werden, wobei die Materialtrommeln der Abwickelvorrichtung üblicherweise in Form einer Trommelkassette bereitgestellt werden.

Zur Optimierung der Zykluszeiten bestehen Bestrebungen, den Trommel- bzw. Kassettenwechsel innerhalb entsprechender Abwickelvorrichtungen zu automatisieren. Hierzu ist der Abwicklungsvorgang zu überwachen, damit eine vollständige Abwicklung des Bandmaterials von der Materialtrommel rechtzeitig erfasst und die Umschaltung auf eine andere Materialtrommel automatisch veranlasst werden kann. Zur Erfassung der vollständigen Abwicklung des Bandmaterials von der Materialtrommel war es bisher üblich, das Bandende des abgewickelten Bandmaterials über optische Sensoren zu detektieren. Bei entsprechenden Abwicklungsvorrichtungen ist insbesondere die Verwendung von Lichtschranken zum Erfassen eines Bandendes bekannt.

Die Praxis hat gezeigt, dass die sensorgestützte optische Erfassung der Bandenden unpräzise und fehleranfällig ist. Dies hat zur Folge, dass die vollständige Abwicklung des Bandmaterials von der Materialtrommel zu früh, zu spät oder überhaupt nicht erfasst wird, sodass ein Eingriff des Maschinenbedieners erforderlich wird. Dies hat einen Maschinenstillstand zur Folge und führt somit zu einer Verzögerung des Reifenherstellungsprozesses. Ferner fällt bei einer fehlerhaften Überwachung der Trommelabwicklung Materialabfall an, welcher einerseits von dem Maschinenbediener zu entsorgen ist und andererseits zu gesteigerten Materialkosten führt.

Die WO 2013/0777069 A1 und WO 2011/073798 A1 offenbaren eine bekannte Vorrichtung für den Einsatz bei der Reifenherstellung, wobei WO 2013/0777069 den Gegenstand des Oberbegriffs des Anspruchs 1 offenbart.

Die der Erfindung zugrundeliegende Aufgabe besteht somit darin, die Erfassung der vollständigen Abwicklung eines Bandmaterials von einer Materialtrommel im Reifenbauprozess zu verbessern, sodass ein automatischer Trommel- bzw. Kassettenwechsel nach dem vollständigen Abwickeln des Bandmaterials von der Materialtrommel ermöglicht wird.

Die Aufgabe wird durch Anspruch 1 gelöst.

Durch die mechanische Abtastung des Förderpfads mittels des Materialtasters ist eine optische Sensierung des Bandmaterials nicht länger erforderlich. Die mechanische Abtastung ist wesentlich zuverlässiger und präziser als die Bandendendetektion mittels einer Lichtschranke und weist eine wesentlich geringere Fehleranfälligkeit auf.

Die Materialtrommel kann der Vorrichtung beispielsweise in Form einer Trommelkassette zugeführt werden. Die Vorrichtung kann mit mehreren, beispielsweise zwei, Trommelkassetten gleichzeitig beschickt sein. Die Überwachungseinrichtung erlaubt einen automatischen Wechsel der sich in der Abwicklung befindenden Materialtrommel. Somit ist kein Benutzereingriff beim Trommel- bzw. Kassettenwechsel erforderlich.

Durch die mechanische Abtastung des Förderpfads wird ein Anlagenstillstand zum Kassettenwechsel effektiv vermieden. Die Bedienung der Vorrichtung und das Beschicken der Vorrichtung werden erheblich vereinfacht. Außerdem wird das Fehlerpotential durch manuelle Bedienereingriffe erheblich reduziert. Durch die präzise Erfassung des Bandendes des abgewickelten Bandmaterials wird außerdem der bei der Reifenherstellung anfallende Materialabfall reduziert. Bei dem Bandmaterial handelt es sich vorzugsweise um den sogenannten Rolled-Tread.

Das für die Herstellung von Fahrzeugreifen erforderliche Bandmaterial wird vorzugsweise von einer Trägerschicht getragen, wobei das Bandmaterial und die Trägerschicht gemeinsam von der Materialtrommel abgewickelt werden. Das Bandmaterial liegt vorzugsweise auf der Trägerschicht auf. Die Trägerschicht kann eine Trägerfolie sein. Die Trägerschicht kann Abstandselemente, beispielsweise Stifte oder Noppen, aufweisen, auf welchen das Bandmaterial aufliegt. Die Abstandselemente können auch als Spacer bezeichnet werden. Die Trägerschicht ist vor dem Abrollen der Materialtrommel vorzugsweise länger als das Bandmaterial, sodass die Trägerschicht vor dem Anfang des Bandmaterials beginnt und/oder hinter dem Ende des Bandmaterials endet. Vor dem Bandanfang und/oder hinter dem Bandende befindet sich vorzugsweise jeweils ein Abschnitt der Trägerschicht, auf welchem kein Bandmaterial aufliegt. Diese Abschnitte werden auch als Leerfolie oder Leertuch bezeichnet.

In einer Ausführungsform der erfindungsgemäßen Vorrichtung weist der Materialtaster einen Kontaktkörper auf, welcher dazu eingerichtet ist, an der Taststelle in Kontakt mit dem sich entlang des Förderpfads bewegenden abgewickelten Bandmaterials zu stehen. Der Kontaktkörper kann beispielsweise an einer Oberseite des Bandmaterials entlang gleiten oder an einer Oberseite des Bandmaterials abrollen. Entsprechend kann der Kontaktkörper beispielsweise beweglich gelagert, beispielsweise drehbar gelagert, sein. Alternativ kann der Kontaktkörper unbeweglich an einem Trägerglied befestigt sein. Der Kontaktkörper kann beispielsweise aus Metall und/oder aus Kunststoff ausgebildet sein.

In einer Weiterbildung der erfindungsgemäßen Vorrichtung ist der Kontaktkörper dazu eingerichtet, während des Kontakts mit dem Bandmaterial unter Vorspannung zu stehen und eine vorspannungsbedingte Bewegung auszuführen, wenn das Bandende des Bandmaterials die Taststelle passiert. Über die Vorspannung wird der Kontaktkörper vorzugsweise auf das Bandmaterial gedrückt. Der Kontaktkörper kann dazu eingerichtet sein, eine vorspannungsbedingte Bewegung auszuführen, wenn ein Bandanfang eines Bandmaterials die Taststelle passiert. Die vorspannungsbedingte Bewegung kann eine Hubbewegung oder eine Schwenkbewegung des Kontaktkörpers sein. Die Vorspannung wird vorzugsweise über eine Federeinheit auf den Kontaktkörper oder den gesamten Materialtaster aufgebracht, sodass die Vorspannung einer Federspannung ist.

Der Kontaktkörper ist vorzugsweise mit einem Sensor gekoppelt, wobei der Sensor dazu eingerichtet ist, eine Auslenkung oder eine Bewegung des Kontaktkörpers zu erfassen. Der Sensor kann beispielsweise ein kapazitiver Näherungssensor oder ein induktiver Näherungssensor sein. Der Sensor ist vorzugsweise dazu eingerichtet, die Bewegung des Kontaktkörpers zu erkennen, welche der Kontaktkörper ausführt, wenn das Bandende die Taststelle passiert. Der Kontaktkörper wird vorzugsweise aufgrund der Vorspannung gegen das Bandmaterial gedrückt, sodass über die Vorspannkraft eine Bewegung des Kontaktkörpers veranlasst wird, sobald das Bandende die Taststelle passiert. Diese Bewegung des Kontaktkörpers kann der Sensor des Materialtasters erkennen, sodass mittels des Sensors ein die fehlende Präsenz des Bandmaterials an der Taststelle betreffendes Signal erzeugt werden kann. Der Sensor kann Bestandteil einer Signalerzeugungseinrichtung der Vorrichtung sein. In einer anderen Ausführungsform der erfindungsgemäßen Vorrichtung ist der Kontaktkörper als Kontaktrolle ausgebildet und dazu eingerichtet, auf einer Oberfläche des sich durch die Taststelle bewegenden Bandmaterials abzurollen. Die Kontaktrolle kann beispielsweise frei drehbar gelagert sein. Ferner kann die Kontaktrolle mit einem Drehsensor ausgestattet sein, über dessen Messwerte die Länge des Bandmaterials berechnet werden kann, welche den Kontaktkörper bereits passiert hat. Das Material des Kontaktkörpers und der über die Vorspannung erzeugte Anpressdruck des Kontaktkörpers auf die Oberfläche des Bandmaterials ist dabei so gewählt, dass der Schlupf des Kontaktkörpers beim Abrollen auf der Oberfläche des Bandmaterials möglichst gering ist.

Es ist außerdem eine erfindungsgemäße Vorrichtung vorgelegt, bei welcher im Nahbereich der Taststelle eine Stützeinrichtung für das Bandmaterial angeordnet ist, wobei der Kontaktkörper dazu eingerichtet ist, das Bandmaterial oder eine Trägerschicht des Bandmaterials gegen die Stützeinrichtung zu drücken, wenn Bandmaterial an der Taststelle präsent ist. Die Stützeinrichtung für das Bandmaterial befindet sich vorzugsweise unterhalb des Bandmaterials und, falls das Bandmaterial von einer Trägerschicht getragen wird, unterhalb der Trägerschicht. Die Stützeinrichtung für das Bandmaterial kann ein Mitläufer sein, also beispielsweise eine Rolle, auf welcher das Bandmaterial oder eine das Bandmaterial tragende Trägerschicht abrollt. Die als Rolle ausgebildete Stützeinrichtung kann eine Umlenkrolle für das Bandmaterial sein. Nachdem das Bandende des Bandmaterials die Taststelle passiert hat, senkt sich der Kontaktkörper aufgrund der Vorspannung in Richtung der Stützeinrichtung ab. Wenn das Bandmaterial von einer Trägerschicht getragen wird, welche länger ist als das Bandmaterial und hinter dem Bandende einen Abschnitt aufweist, auf welchem kein Bandmaterial aufliegt, kommt der Kontaktkörper mit der Trägerschicht in Kontakt, nachdem das Bandende die Taststelle passiert hat. Wenn das Bandmaterial keine Trägerschicht aufweist oder die Trägerschicht mit dem Bandende ebenfalls endet, dann kommt der Kontaktkörper direkt mit der Stützeinrichtung in Berührung, nachdem das Bandende die Taststelle passiert hat.

Es ist außerdem eine erfindungsgemäße Vorrichtung vorteilhaft, welche eine Signalerzeugungseinrichtung aufweist. Die Signalerzeugungseinrichtung ist dazu eingerichtet, ein die fehlende Präsenz des Bandmaterials an der Taststelle betreffendes Signal zu erzeugen, wenn der Materialtaster eine fehlende Präsenz des Bandmaterials an der Taststelle erfasst. Vorzugsweise wird eine fehlende Präsenz des Bandmaterials an der Taststelle erfasst, wenn der Kontaktkörper des Materialtasters aufgrund einer fehlenden Präsenz von Bandmaterial an der Taststelle aufgrund der Vorspannung ausgelenkt wird bzw. sich in Richtung der Stützeinrichtung für das Bandmaterial bewegt. Über das Signal der Signalerzeugungseinrichtung kann einer Steuerung der Vorrichtung mitgeteilt werden, dass die Materialtrommel vollständig abgewickelt ist. Wenn der Materialtaster in Kontakt mit Bandmaterial steht, kann entweder kein Signal oder ein das Vorhandensein des Bandmaterials an der Taststelle betreffendes Signal erzeugt werden.

In einer anderen Ausführungsform umfasst die erfindungsgemäße Vorrichtung eine Umschalteinrichtung, welche dazu eingerichtet ist, nach dem vollständigen Abwickeln des Bandmaterials von der Materialtrommel das Abwickeln von Bandmaterial von einer anderen Materialtrommel zu veranlassen. Die Umschalteinrichtung ist folglich dazu eingerichtet, einen Wechsel zu einer anderen Materialtrommel zu veranlassen. Nachdem der Abwickelvorgang auf eine andere Materialtrommel umgeschaltet bzw. umgestellt wurde, kann die leere Materialtrommel entnommen und durch eine volle Materialtrommel ersetzt werden. Ein Stillstand der Anlage wird auf diese Weise effektiv vermieden. Das von der anderen Materialtrommel abgewickelte Bandmaterial kann dem gleichen Förderpfad oder einem anderen Förderpfad zugeführt werden. Wenn das Bandmaterial der anderen Materialtrommel einem anderen Förderpfad zugeführt wird, weist dieser Förderpfad vorzugsweise ebenfalls eine entsprechende Überwachungseinrichtung mit einem Materialtaster auf.

Der Materialtaster oder der Kontaktkörper des Materialtasters kann über ein Bewegungssystem verfahrbar sein, sodass der Kontaktkörper zum Kassettenwechsel temporär aus dem Förderpfad herausbewegt werden kann. Beispielsweise wird der Materialtaster oder der Kontaktkörper des Materialtasters beim Kassettenwechsel nach oben verfahren, damit die Trommelkassette mit der leeren Materialtrommel entnommen und durch eine Trommelkassette mit einer vollen Materialtrommel ersetzt werden kann. Das Bewegungssystem kann einen oder mehrere Zylinder, beispielsweise Hydraulik- oder Pneumatikzylinder umfassen.

Ein Verfahren wird vorgelegt, wobei im Rahmen des erfindungsgemäßen Verfahrens ein mechanisches Abtasten einer Taststelle des Förderpfads mittels eines Materialtasters der Überwachungseinrichtung erfolgt, sodass über die mechanische Abtastung des Materialtasters die Präsenz des Bandmaterials an der Taststelle des Förderpfads erfasst wird. Das Verfahren wird vorzugsweise zum Abwickeln von Laufstreifenmaterial eingesetzt. Insbesondere erfolgt das Abwickeln mittels einer Vorrichtung zum Abwickeln von Bandmaterial nach einer der vorstehend beschriebenen Ausführungsformen. Hinsichtlich der Vorteile und Modifikationen des erfindungsgemäßen Verfahrens wird somit zunächst auf die Vorteile und Modifikationen der erfindungsgemäßen Vorrichtung verwiesen.

In einer bevorzugten Ausführungsform des erfindungsgemäßen Verfahrens steht ein Kontaktkörper des Materialtasters an der Taststelle in Kontakt mit dem sich entlang des Förderpfads bewegenden abgewickelten Bandmaterials. Vorzugsweise führt der Kontaktkörper des Materialtasters eine vorspannungsbedingte Bewegung aus, wenn das Bandende des Bandmaterials die Taststelle passiert. Der Kontaktkörper kann als Kontaktrolle ausgebildet sein und auf der Oberfläche des sich durch die Taststelle bewegenden Bandmaterials abrollen. Der Kontaktkörper wird vorzugsweise aufgrund einer Vorspannung in Richtung einer unterhalb des Bandmaterials angeordneten Stützeinrichtung für das Bandmaterial bewegt, nachdem das Bandende des Bandmaterials die Taststelle passiert hat.

In einer weiteren bevorzugten Ausführungsform des erfindungsgemäßen Verfahrens wird mittels einer Signalerzeugungseinrichtung der Vorrichtung ein die fehlende Präsenz des Bandmaterials an der Taststelle betreffendes Signal erzeugt, wenn der Materialtaster eine fehlende Präsenz des Bandmaterials an der Taststelle des Förderpfads erfasst. Alternativ oder zusätzlich veranlasst eine Umschalteinrichtung der Vorrichtung das Abwickeln von Bandmaterial von einer anderen Materialtrommel, wenn der Materialtaster eine fehlende Präsenz des Bandmaterials an der Taststelle des Förderpfads erfasst. Das von der anderen Materialtrommel abgewickelte Bandmaterial kann dem gleichen oder einem anderen Förderpfad zugeführt werden.

Nachfolgend werden bevorzugte Ausführungsformen der Erfindung unter Bezugnahme auf die beiliegenden Zeichnungen näher erläutert und beschrieben. Dabei zeigen:
- Fig. 1: einen Teil einer Reifenbauanlage mit einer erfindungsgemäßen Vorrichtung zum Abwickeln von Laufstreifenmaterial in einer Seitenansicht;
- Fig. 2: eine erfindungsgemäße Vorrichtung zum Abwickeln von Laufstreifenmaterial in einer Seitenansicht während des Abwickelns von Laufstreifenmaterial;
- Fig. 3: die in der Fig. 2 abgebildete Vorrichtung in einer Seitenansicht nachdem das Bandende des Laufstreifenmaterials eine Taststelle passiert hat; und
- Fig. 4: die in der Fig. 2 abgebildete Vorrichtung in einer Seitenansicht nachdem ein Materialtaster aus dem Förderpfad des Laufstreifenmaterial herausbewegt wurde.

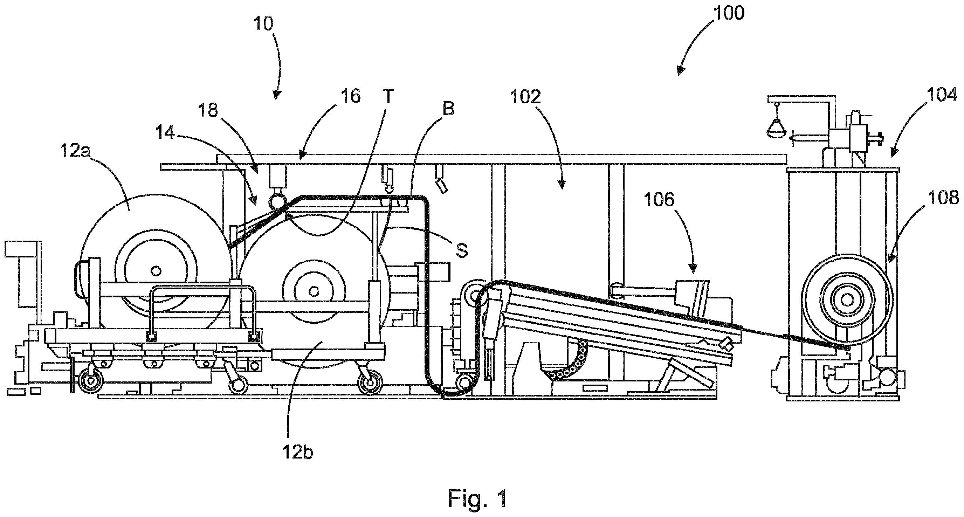

Die Fig. 1 zeigt einen Teil einer Reifenbauanlage 100, in welcher Bandmaterial B, nämlich Laufstreifenmaterial, von einer Materialtrommel 12a abgewickelt wird. Das Bandmaterial B ist vor dem Abwickelvorgang gemeinsam mit einer Trägerschicht S auf die Materialtrommel 12a aufgewickelt. Die Trägerschicht S kann eine Trägerfolie sein, welche länger ist als das Bandmaterial B, sodass die Trägerschicht S vor und hinter dem Bandmaterial B Abschnitte aufweist, auf welchen kein Bandmaterial B aufliegt. Diese Abschnitte werden auch als Leerfolie oder Leertuch bezeichnet.

Das von der Materialtrommel 12a abgewickelte Bandmaterial B wird nach der Trennung von der Trägerschicht S einer Ablängeinrichtung 102 zugeführt, über welche ein Zuschnitt des Bandmaterials B auf eine geeignete Länge erfolgt. Die von dem Bandmaterial B getrennte Trägerschicht S wird direkt nach dem Trennvorgang auf die Materialtrommel 12b gewickelt. Das Bandmaterial B wird der Ablängeinrichtung 102 somit ohne die Trägerschicht S zugeführt. Die Materialtrommeln 12a und 12b bilden sind somit eine Einheit, beispielsweise im Form einer Trommelkassette. Während des Abwickelns des Bandmaterials B von der Materialtrommel 12a erfolgt auch ein Aufwickeln der Trägerschicht S auf die Materialtrommel 12b. Das zugeschnittene Bandmaterial B wird dann einer Trommelstation 104 zugeführt.

Die Ablängeinrichtung 102 weist ein Schneidgerät 106 auf, mittels welchem das abgewickelte Bandmaterial B auf eine geeignete Länge zugeschnitten wird. Das Fördern des Bandmaterials B erfolgt über ein Fördersystem der Ablängeinrichtung 102, wobei das Fördersystem beispielsweise ein Förderband sein kann. Die Trommelstation 104 weist eine oder mehrere Reifenbautrommeln 108 auf, auf welche die zugeschnittenen Materialabschnitte zur Ausführung weiterer Herstellungsschritte im Reifenbauprozess aufgelegt werden.

Das Abwickeln des Bandmaterials B erfolgt über die Vorrichtung 10. Die Vorrichtung 10 ist mit zwei Trommelkassetten beschickt. Die im Vordergrund dargestellte Trommelkassette umfasst zwei Materialtrommeln 12a, 12b. Die zweite Trommelkassette ist verdeckt und umfasst ebenfalls zwei Materialtrommeln.

Auf einer Materialtrommel 12a der jeweiligen Trommelkassetten ist Bandmaterial B aufgewickelt, wobei sich das Bandmaterial B auf einer Trägerschicht S befindet. Die andere Materialtrommel 12b der jeweiligen Trommelkassetten dient zum Aufwickeln der Trägerschicht S, nachdem diese von dem Bandmaterial B getrennt wurde.

Sobald die Materialtrommel 12a vollständig abgewickelt wurde, erfolgt eine Umschaltung auf eine Materialtrommel der anderen Trommelkassette. Die Trommelkassette mit der leeren Materialtrommel 12a kann während des Abwickelns der Materialtrommel der anderen Trommelkassette durch eine neue Trommelkassette mit einer vollen Materialtrommel ersetzt werden. Auf diese Weise wird ein langandauernder Anlagenstillstand vermieden.

Die Vorrichtung 10 umfasst einen Förderpfad 14, entlang welchem sich das von der Materialtrommel 12a abgewickelte Bandmaterial B bewegt. Über eine Überwachungseinrichtung 16 der Vorrichtung 10 wird die vollständige Abwicklung des Bandmaterials B von der Materialtrommel 12a erfasst, sodass eine rechtzeitige Umschaltung auf eine Materialtrommel einer anderen Trommelkassette veranlasst werden kann.

Die Überwachungseinrichtung 16 umfasst einen Materialtaster 18, mittels welchem eine Taststelle T des Förderpfads 14 mechanisch abgetastet werden kann. Über die mechanische Abtastung des Materialtasters 18 wird die Präsenz des Bandmaterials B an der Taststelle T des Förderpfads erfasst. Wenn über dem Materialtaster 18 erfasst wird, dass sich an der Taststelle T des Förderpfads 14 kein Bandmaterial B befindet, ist die Umschaltung auf eine Materialtrommel einer anderen Trommelkassette erforderlich. Die Umschaltung auf eine Materialtrommel einer anderen Trommelkassette kann beispielsweise durch ein automatisiertes Herausbewegen der die Materialtrommeln 12a, 12b umfassenden Trommelkassette aus einem Abwickelbereich der Vorrichtung 10 und ein automatisiertes Hineinbewegen der neuen Trommelkassette in den Abwickelbereich der Vorrichtung 10 erfolgen, wobei das Heraus- und Hereinbewegen der Trommelkassetten beispielsweise durch ein Herein- und Herausdrehen der Trommelkassetten in den bzw. aus dem Abwickelbereich der Vorrichtung 10 umgesetzt werden kann.

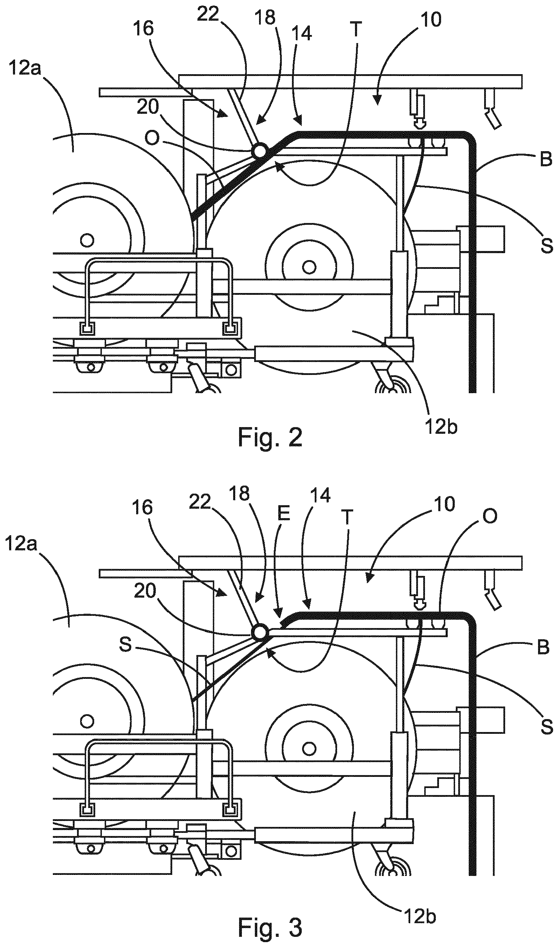

Die Fig. 2 bis 4 zeigen eine Vorrichtung 10 zum Abwickeln von Bandmaterial B zu unterschiedlichen Abwicklungszeitpunkten.

Die Vorrichtung 10 umfasst einen Materialtaster 18 mit einem Kontaktkörper 20. Der Kontaktkörper 20 ist als Kontaktrolle ausgebildet und dazu eingerichtet, auf der Oberfläche O des sich durch die Taststelle T bewegenden Bandmaterials B abzurollen. Der Kontaktkörper 20 ist folglich dazu eingerichtet, an der Taststelle T in Kontakt mit dem sich entlang des Förderpfads 14 bewegenden Bandmaterial B zu stehen.

Die Fig. 2 zeigt einen Zustand, in dem sich das abgewickelte Bandmaterial B durch die Taststelle T hindurchbewegt, sodass der als Rolle ausgebildete Kontaktkörper 20 auf der Oberfläche O des Bandmaterials B abrollt. Hierbei steht der Kontaktkörper 20 unter Vorspannung, wobei die Vorspannung den Kontaktkörper 20 auf die Oberfläche O des Bandmaterials B drückt. Die Vorspannung wird über eine nicht dargestellte Federeinheit auf den Kontaktkörper 20 oder auf den gesamten Materialtaster 18 aufgebracht.

Bei dem in der Fig. 3 dargestellten Zustand hat das Bandende E des Bandmaterials B die Taststelle T bereits passiert. Dieser Zustand tritt ein, wenn das Bandmaterial B vollständig von der Materialtrommel 12a abgewickelt wurde. Aufgrund der Vorspannung des Kontaktkörpers 20 hat der Kontaktkörper 20 eine vorspannungsbedingte Bewegung ausgeführt, nachdem das Bandende E des Bandmaterials B die Taststelle T passiert hat. Die vorspannungsbedingte Bewegung des Kontaktkörpers 20 ist vorliegend eine Hubbewegung, nämlich eine Linearbewegung nach unten. Nach dem Ausführen der Linearbewegung steht der Kontaktkörper 20 mit dem Abschnitt der Trägerschicht S des Bandmaterials B in Kontakt, auf welchem kein Bandmaterial B aufliegt. Der Kontaktkörper 20 steht also mit der Leerfolie in Kontakt, nachdem das Bandende E die Taststelle T passiert hat. In anderen Ausführungsformen kann die vorspannungsbedingte Bewegung, welche der Kontaktkörper 20 ausführt, nachdem das Bandende E des Bandmaterials B die Taststelle T passiert hat, auch eine andere Bewegung, beispielsweise eine Schwenkbewegung, sein.

Im Nahbereich der Taststelle T kann eine nicht dargestellte Stützeinrichtung für das Bandmaterial B angeordnet sein. Der Kontaktkörper 20 senkt sich in Richtung der Stützeinrichtung ab, nachdem das Bandende E des Bandmaterials B die Taststelle T passiert hat. Eine entsprechende Stützeinrichtung für das Bandmaterial B befindet sich vorzugsweise unterhalb des Bandmaterials B. Beispielsweise gleitet die Unterseite des Bandmaterials B über die Stützeinrichtung oder die Stützeinrichtung ist eine Stützrolle, welche ein Drehbewegung ausführt, wenn sich das Bandmaterial B durch die Taststelle T bewegt.

Der Kontaktkörper 20 ist mit einem Sensor gekoppelt, welcher die Auslenkung des Kontaktkörpers 20 erfasst. Der Sensor ist dabei beispielsweise ein berührungslos arbeitender Näherungssensor. Der Sensor erkennt die Bewegung des Kontaktkörpers 20, welche der Kontaktkörper 20 ausführt, wenn das Bandende E die Taststelle T passiert. Da Kontaktkörper 20 aufgrund der Vorspannung gegen das Bandmaterial B gedrückt wird, bewegt sich der Kontaktkörper, sobald das Bandende E die Taststelle T passiert hat und einen Bewegungsraum für den Kontaktkörper 20 freigibt. Diese Bewegung des Kontaktkörpers 20 wird von dem Sensor erkannt, sodass mittels des Sensors ein die fehlende Präsenz des Bandmaterials B an der Taststelle T betreffendes Signal erzeugt werden kann.

Der Sensor ist Bestandteil einer Signalerzeugungseinrichtung, welche also ein die fehlende Präsenz des Bandmaterials B an der Taststelle T betreffendes Signal erzeugt, sobald das Bandende E die Taststelle T passiert hat. Über das erzeugte Signal kann einer Steuerung mitgeteilt werden, dass das Bandmaterial B vollständig von der Materialtrommel 12a abgewickelt ist, sodass über eine Umschalteinrichtung der Vorrichtung 10 das Abwickeln des Bandmaterials B von einer anderen Materialtrommel veranlasst werden kann. Die Umschalteinrichtung der Vorrichtung 10 ist vorzugsweise dazu eingerichtet, das Abwickeln einer anderen Materialtrommel automatisch und ohne Benutzereingriffe zu veranlassen.

Nach dem Wechsel auf eine Materialtrommel einer anderen Trommelkassette kann das Bandmaterial B entweder dem gleichen oder einem anderen Förderpfad 14 zugeführt werden.

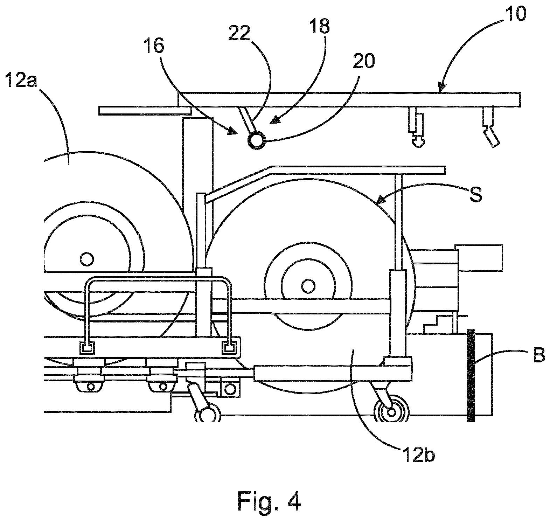

Die Fig. 4 zeigt, dass die Vorrichtung 10 ein Bewegungssystem 22 aufweist, mittels welchem der Kontaktkörper 20 oder der gesamte Materialtaster 18 verfahrbar ist, sodass der Kontaktkörper 20 zum Kassettenwechsel temporär aus dem Förderpfad 14 herausbewegt werden kann. In dem dargestellten Ausführungsbeispiel wird der Kontaktkörper 20 des Materialtasters 18 nach oben verfahren, damit ein Kassettenaustausch erfolgen kann. Das Bewegungssystem 22 kann einen Zylinder, beispielsweise einen Pneumatikzylinder, umfassen, über welchen die Freigabebewegung des Kontaktkörpers 20 realisiert werden kann.

### Bezugszeichenliste

- 10: Vorrichtung
- 12a, 12b: Materialtrommeln
- 14: Förderpfad
- 16: Überwachungseinrichtung
- 18: Materialtaster
- 20: Kontaktkörper
- 22: Bewegungssystem

- 100: Reifenbauanlage
- 102: Ablängeinrichtung
- 104: Trommelstation
- 106: Schneidgerät
- 108: Reifenbautrommel

- B: Bandmaterial
- E: Bandende
- O: Oberfläche
- S: Trägerschicht
- T: Taststelle

## Patentansprüche

1. Vorrichtung (10) zum Abwickeln von einem für die Herstellung von Fahrzeugreifen erforderlichen Bandmaterial (B), insbesondere Laufstreifenmaterial, von einer Materialtrommel (12a), mit
- einem Förderpfad (14), entlang welchem sich von der Materialtrommel (12a) abgewickeltes Bandmaterial (B) bewegt; und
- einer Überwachungseinrichtung (16), welche dazu eingerichtet ist, eine vollständige Abwicklung des Bandmaterials (B) von der Materialtrommel (12a) zu erfassen;
wobei die Überwachungseinrichtung (16) einen Materialtaster (18) umfasst, welcher dazu eingerichtet ist, eine Taststelle (T) des Förderpfads (14) mechanisch abzutasten, sodass über die mechanische Abtastung des Materialtasters (18) die Präsenz des Bandmaterials (B) an der Taststelle (T) des Förderpfads (14) erfassbar ist, wobei der Materialtaster (18) einen Kontaktkörper (20) aufweist, welcher dazu eingerichtet ist, an der Taststelle (T) in Kontakt mit dem sich entlang des Förderpfads (14) bewegenden abgewickelten Bandmaterial (B) zu stehen,
**dadurch gekennzeichnet, dass**
im Nahbereich der Taststelle (T) eine Stützeinrichtung für das Bandmaterial (B) angeordnet ist, wobei der Kontaktkörper (20) dazu eingerichtet ist, das Bandmaterial (B) oder eine Trägerschicht (S) des Bandmaterials (B) gegen die Stützeinrichtung zu drücken, wenn Bandmaterial (B) an der Taststelle (T) präsent ist.

2. Vorrichtung (10) nach Anspruch 1,
**dadurch gekennzeichnet, dass** der Kontaktkörper (20) dazu eingerichtet ist, während des Kontakts mit dem Bandmaterial (B) unter Vorspannung zu stehen und eine vorspannungsbedingte Bewegung auszuführen, wenn das Bandende (E) des Bandmaterials (B) die Taststelle (T) passiert.

3. Vorrichtung (10) nach Anspruch 2,
**dadurch gekennzeichnet, dass** der Kontaktkörper (20) als Kontaktrolle ausgebildet und dazu eingerichtet ist, auf einer Oberfläche (O) des sich durch die Taststelle (T) bewegenden Bandmaterials (B) abzurollen.

4. Vorrichtung (10) nach Anspruch 3,
**gekennzeichnet durch** eine Signalerzeugungseinrichtung, welche dazu eingerichtet ist, ein die fehlende Präsenz des Bandmaterials (B) an der Taststelle (T) betreffendes Signal zu erzeugen, wenn der Materialtaster (18) eine fehlende Präsenz des Bandmaterials (B) an der Taststelle (T) erfasst.

5. Vorrichtung (10) nach einem der vorstehenden Ansprüche,
**gekennzeichnet durch** eine Umschalteinrichtung, welche dazu eingerichtet ist, nach dem vollständigen Abwickeln des Bandmaterials (B) von der Materialtrommel (12a) das Abwickeln von Bandmaterial (B) von einer anderen Materialtrommel zu veranlassen.

## Claims

1. Device (10) for unwinding strip material (B) required for producing vehicle tyres, in particular tread material, from a material drum (12a), having
- a conveying path (14) along which strip material (B) that has been unwound from the material drum (12a) moves; and
- a monitoring device (16) which is configured to detect complete unwinding of the strip material (B) from the material drum (12a);
wherein the monitoring device (16) comprises a material sampler (18) which is configured to mechanically scan a sampling point (T) on the conveying path (14), so that the presence of the strip material (B) at the sampling point (T) on the conveying path (14) can be detected by means of the mechanical scanning by the material sampler (18), wherein the material sampler (18) has a contact body (20) which is configured to be in contact with the unwound strip material (B) moving along the conveying path (14) at the sampling point (T),
**characterized in that**
a supporting device for the strip material (B) is arranged close to the sampling point (T), wherein the contact body (20) is configured to push the strip material (B) or a carrier layer (S) of the strip material (B) against the supporting device when strip material (B) is present at the sampling point (T).

2. Device (10) according to Claim 1, **characterized in that** the contact body (20) is configured to be under preload when it is in contact with the strip material (B) and to execute a preload-related movement when the end (E) of the strip material (B) passes the sampling point (T).

3. Device (10) according to Claim 2, **characterized in that** the contact body (20) is designed as a contact roll and is configured to roll on a surface (O) of the strip material (B) moving through the contact point (T).

4. Device (10) according to Claim 3, **characterized by** a signal-generating device which is configured to generate a signal relating to the absence of the strip material (B) at the sampling point (T) when the material sampler (18) detects an absence of strip material (B) at the sampling point (T).

5. Device (10) according to any of the preceding claims, **characterized by** a changeover device which is configured to initiate unwinding of strip material (B) from another material drum after the strip material (B) has been completely unwound from the material drum (12a).

## Revendications

1. Arrangement (10) de déroulement d'un matériau en bande (B) nécessaire à la fabrication de pneus de véhicules, notamment un matériau de bande de roulement, à partir d'un touret de matériau (12a), comprenant
- un chemin de transport (14) le long duquel se déplace le matériau en bande (B) déroulé du touret de matériau (12a) ; et
- un dispositif de surveillance (16), lequel est conçu pour détecter un déroulement complet du matériau en bande (B) du touret de matériau (12a) ;
le dispositif de surveillance (16) comprenant un palpeur de matériau (18), lequel est conçu pour palper mécaniquement un point de palpage (T) du chemin de transport (14), de telle sorte que la présence du matériau en bande (B) peut être détectée au niveau du point de palpage (T) du chemin de transport (14) par le biais du palpage mécanique du palpeur de matériau (18), le palpeur de matériau (18) possédant un corps de contact (20), lequel est conçu pour être en contact, au niveau du point de palpage (T), avec le matériau en bande (B) déroulé qui se déplace le long du chemin de transport (14),
**caractérisé en ce que**
un dispositif de soutien pour le matériau en bande (B) est disposé dans la zone de proximité du point de palpage (T), le corps de contact (20) étant conçu pour presser le matériau en bande (B) ou une couche porteuse (S) du matériau en bande (B) contre le dispositif de soutien lorsque le matériau en bande (B) est présent au niveau du point de palpage (T).

2. Arrangement (10) selon la revendication 1, **caractérisé en ce que** le corps de contact (20) est conçu pour être précontraint pendant le contact avec le matériau en bande (B) et pour effectuer un mouvement lié à la précontrainte lorsque l'extrémité de bande (E) du matériau en bande (B) passe par le point de palpage (T).

3. Arrangement (10) selon la revendication 2, **caractérisé en ce que** le corps de contact (20) est réalisé sous la forme d'un rouleau de contact et il est conçu pour rouler sur une surface (O) du matériau en bande (B) qui se déplace à travers le point de palpage (T).

4. Arrangement (10) selon la revendication 3, **caractérisé par** un dispositif de génération de signal, lequel est conçu pour générer un signal concernant la présence manquante du matériau en bande (B) au niveau du point de palpage (T) lorsque le palpeur de matériau (18) détecte une présence manquante du matériau en bande (B) au niveau du point de palpage (T).

5. Arrangement (10) selon l'une des revendications précédentes, **caractérisé par** un dispositif de permutation, lequel est conçu pour provoquer le déroulement du matériau en bande (B) à partir d'un autre touret de matériau après le déroulement complet du matériau en bande (B) à partir du touret de matériau (12a).
